# EUROPÄISCHE PATENTSCHRIFT

(11) **EP 0 779 750 B1**
(45) Veröffentlichungstag und Bekanntmachung des Hinweises auf die Patenterteilung: **10.04.2002**
(21) Anmeldenummer: 96118225.0
(22) Anmeldetag: 13.11.1996
(51) Int. Cl.: H04Q 7/22, H04M 15/00

(54) **Verfahren und Schaltungsanordnung zur Leitweglenkung und Gebührenerfassung in einer Vermittlungsstelle**
Method and arrangement for routing and billing in switching equipment
Méthode et dispositif d'acheminement et de taxation dans un autocommutateur

(30) Priorität: 13.12.1995 DE 19546598
(43) Veröffentlichungstag der Anmeldung: 18.06.1997
(73) Patentinhaber: SIEMENS AKTIENGESELLSCHAFT, 80333 München (DE)
(72) Erfinder: Placho, Markus, 2073 Schrattenthal (AT); Topuzoglu, Eftat, Dipl.-Ing., 2481 Achau (AT)

(56) Entgegenhaltungen:
- EP-A- 0 479 660
- EP-A- 0 602 779
- US-A- 5 206 899
- US-A- 5 311 572
- US-A- 5 329 578

## Beschreibung

Die Erfindung betrifft ein Verfahren zur Leitweglenkung und Gebührenerfassung in einer Vermittlungsstelle gemäß dem Oberbegriff des Patentanspruchs 1.

Aus dem Aufsatz "The Digital Mobile System D900 - A Step Towards The Telecommunication Management and Intelligent Network Architecture", von M. Grenzhäuser, H. Auspurg, VIII International Switching Symposium, Stockholm 27. Mai-1.Juni 1990, Vol. VI, Seiten 187 bis 193 ist ein digitales zellular aufgebautes Mobilfunknetz nach dem GSM-Standard (Global System for Mobile Communication) bekannt. Dabei sind teilnehmerbezogene Daten der Mobilfunkteilnehmer in einem oder mehreren Heimatregistern (Home Location Register) an zentraler Stelle im Netz gespeichert. Abhängig vom jeweiligen Aufenthaltsort des Mobilfunkteilnehmers werden die teilnehmerbezogenen Daten von einem Besucherregister (Visitor Location Register) zur Verfügung gestellt, in dessen Versorgungsbereich der Mobilfunkteilnehmer sich gerade befindet. Jedem Besucherregister ist eine Mobilvermittlungsstelle (Mobile Switching Center) zugeordnet, die alle mobilfunkspezifischen Vermittlungsfunktionen, die sich aus der Mobilität der Mobilfunkteilnehmer ergeben, übernimmt. Sie dient dabei als Netzzugangs-Mobilvermittlungsstelle zu anderen Übertragungsnetzen und ist mit anderen Mobilvermittlungsstellen und mit Funkeinrichtungen des Funkübertragungssystems (Base Station System) im Mobilfunknetz verbunden. Jeder Vermittlungsstelle im Mobilfunknetz obliegt auch die Leitweglenkung (routing) und die Gebührenerfassung für jeden beim Mobilfunkteilnehmer ankommenden oder vom Mobilfunkteilnehmer abgehenden Anruf.

In einem deregulierten, nicht monopolistischen Telekommunikationsmarkt gibt es üblicherweise eine Mehrzahl von Netzbetreibern und Übertragungsnetzen. Dies bedeutet, daß Netzbetreiber unterschiedliche Netzteilnehmer wie Mobilfunkteiler, Festnetzteilnehmer, Nebenstellenteilnehmer oder ganze Netze als Kunden aufweisen. Für jeden dieser Kunden muß festgelegt werden, wie ein ankommender oder abgehender Anruf von bzw. zu bestimmten Zielen gelenkt und vergebührt werden soll.

Aus der EP-A-0 602 779 ist es bekannt, ein Mobilfunkteilnehmer- Profil eines Mobilfunkteilnehmers in einem Festnetztelefonendgerät unterzubringen und Anrufe von oder zu diesem Festnetztelefonendgerät entsprechend dem Mobilfunkteilnehmer-Profil zu behandeln.

Aus der US-A-5 206 899 ist es bekannt, daß ein Mobilfunkteilnehmer beliebigen Endgeräten beliebiger Telekommunikationsnetze jeweils ohne Änderung der Endgeräts- Identität ein Profil zuweisen kann, welches beispielsweise Konferenzschaltungen oder die Inanspruchnahme besonderer Tarife von einem derartigen Endgerät erlaubt.

Es ist Aufgabe der vorliegenden Erfindung, ein Verfahren zur Leitweglenkung und Gebührenerfassung anzugeben, durch das die Anrufe von bzw. zu Mobilfunkteilnehmern flexibel zu bestimmten Zielen gelenkt und vergebührt werden können.

Diese Aufgabe wird gemäß der Erfindung durch die Merkmale des Patentanspruchs 1 gelöst. Weiterbildungen der Erfindung sind in den Unteransprüchen angegeben.

Demnach wird für die Mobilfunkteilnehmer jeweils eine Kundennummer als teilnehmerbezogenes Datum in die zentrale Teilnehmerdatenbasis des Mobilfunknetzes eingetragen. In Abhängigkeit der eingetragenen Kundennummer ist festgelegt, über welches weitere Übertragungsnetz, das Übertragungsleitungen zur Verfügung stellt, die Leitweglenkung und die Gebührenerfassung durchgeführt wird. Auf diese Weise ist es möglich, die bei den Mobilfunkteilnehmern ankommenden bzw. von den Mobilfunkteilnehmern abgehenden Anrufe über ausgewählte Übertragungsnetze zu leiten und zu vergebühren, was eine höhere Flexibilität für die Netzbetreiber in bezug auf die Zuteilung von Übertragungswegen und die Erfassung der anfallenden Gebühren in Abhängigkeit einzelner Mobilfunkteilnehmer oder Gruppen von Mobilfunkteilnehmern bedeutet.

Gemäß einer Weiterbildung der Erfindung wird die Kundennummer im Heimatregister des Mobilfunknetzes gespeichert und zur Auswertung an das jeweilige Besucherregister, in dessen Versorgungsbereich der Mobilfunkteilnehmer anwesend ist, übergeben, um die Leitweglenkung und Gebührenerfassung von der zugehörigen Mobilvermittlungsstelle durchführen zu lassen.

Gemäß einer anderen Weiterbildung der Erfindung kann die Kundennummer in einer Dienstesteuerungsstelle, die zur Abwicklung von Diensten in das Mobilfunknetz eingebunden ist, gespeichert und zur Durchführung der Leitweglenkung und Gebührenerfassung herangezogen werden.

Von Vorteil ist es, wenn Mobilfunkteilnehmern, denen Dienste über verschiedene Diensteanbieter zur Verfügung gestellt werden, unterschiedliche Kundennummern zugeordnet werden.

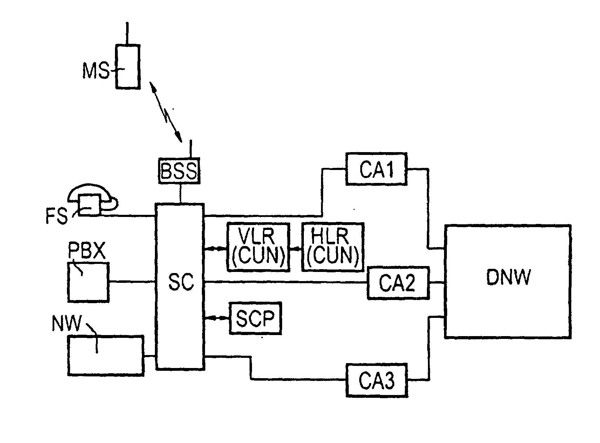

Die Erfindung wird anhand eines in Figuren dargestellten Ausführungsbeispiels erläutert. Die Figur zeigt die Vermittlungsstelle eines Netzbetreibers, an die auch Mobilfunkteilnehmer angeschlossen sind, um bei ankommenden oder abgehenden Anrufen im Mobilfunknetz die Lenkung und Vergebührung durchzuführen. Es handelt sich dabei um eine Vermittlungsstelle SC in einem Übertragungsnetz, an die andere Netze NW und/oder Nebenstellenanlagen PBX und/oder einzelne Netzteilnehmer über feste Teilnehmerstationen FS und mobile Teilnehmerstationen MS angeschlossen sind. Die Vermittlungsstelle SC gehört zu einem Übertragungsnetz, dessen Netzbetreiber die angeschlossenen Netzteilnehmer, Nebenstellenanlagen und Netzwerke als Kunden aufweist. Dabei kann von dem Netzbetreiber mit jedem Kunden individuell festgelegt werden, wie ankommende und abgehende Anrufe gelenkt und vergebührt werden. Im vorliegenden Beispiel sei angenommen, daß ein von einem Mobilfunkteilnehmer über seine Funkteilnehmerstation MS abgehender Anruf über die Luftschnittstelle zu einem Funksystem BSS und von dort zur Vermittlungsstelle SC gelangt. Die Vermittlungsstelle SC bildet im Mobilfunknetz eine von mehreren Mobilvermittlungsstellen (Mobile Switching Centers). An jede Mobilvermittlungsstelle ist mindestens ein Besucherregister VLR angeschlossen, in dem teilnehmerbezogene Daten der Mobilfunkteilnehmer registriert sind, die sich momentan in einem von dem Besucherregister VLR betreuten Versorgungsbereich aufhalten. Dabei enthalten die Besucherregister alle für die Verbindungsbehandlung und den Verbindungsaufbau erforderlichen Daten, solange der Mobilfunkteilnehmer im Versorgungsbereich anwesend ist. Darüber hinaus ist im Mobilfunknetz mindestens ein Heimatregister HLR angeordnet, das die Besucherregister VLR durch Bereitstellen der teilnehmerbezogenen Daten für die Mobilfunkteilnehmer unterstützt. Das Heimatregister HLR ist eine zentrale Teilnehmerdatenbasis, in der alle Teilnehmerdaten der im Mobilfunknetz registrierten Mobilfunkteilnehmer permanent gespeichert sind.

Es besteht auch die Möglichkeit, intelligente Netzfunktionen in einem Übertragungsnetz zu realisieren, um bestehende und neue Dienste für die Netzteilnehmer effektiver abwickeln zu können. Zu diesem Zweck werden daher Dienstevermittlungsstellen (Service Switching Points) und Dienstesteuerungsstellen (Service Control Points) gemäß der Struktur eines Intelligenten Netzes in das jeweilige Übertragungsnetz eingebunden. Die Dienstesteuerungsstelle SCP bildet daher einen intelligenten Netzknoten, der die verschiedenen Dienste, die den Netzteilnehmern zur Verfügung gestellt werden, zentral steuert. In der Dienstesteuerungsstelle SCP sind Programme und Daten konzentriert, die zur Abwicklung der Dienste im Zusammenwirken mit den Dienstevermittlungsstellen vorgesehen sind. Dabei werden üblicherweise die intelligenten Netzfunktionen von entsprechenden Netzbetreibern durchgeführt. Darüber hinaus gibt es spezielle Diensteanbieter, die mit dem Netzbetreiber Vereinbarungen zur Nutzung des Übertragungsnetzes treffen. Die Diensteanbieter stellen ihre Dienste den Netzteilnehmern, die diese Dienste nutzen wollen, zur Verfügung und verwalten sie.

Mit dem von der Funkteilnehmerstation MS ankommenden Anruf wird eine Verbindungsaufbauinformation an die Vermittlungsstelle SC mitgesendet, die aus einer internationalen Mobilteilnehmerkennung (International Mobile Subscriber Identity) besteht. Anschließend fordert die Vermittlungsstelle SC vom zuständigen Besucherregister VLR Verbindungsinformationen und teilnehmerbezogene Daten über den mit der Kennung identifizierten Mobilfunkteilnehmer an. Dabei ist eine Kundennummer CUN als teilnehmerbezogenes Datum des anrufenden Mobilfunkteilnehmers im Besucherregister VLR eingetragen, die für die Leitweglenkung und die Gebührenerfassung in der Vermittlungsstelle SC ausgewertet wird. Diese Kundennummer CUN wird im Heimatregister HLR ebenfalls als teilnehmerbezogenes Datum gespeichert, so daß sie jederzeit und an jedem Aufenthaltsort des Mobilfunkteilnehmers zur Verfügung gestellt werden kann.

Im vorliegenden Beispiel sei angenommen, daß der anrufende Mobilfunkteilnehmer eine Kundennummer CUN erhält, durch die Leitwege über ein anderes Übertragungsnetz CA1 zum Zielnetz DNW von der Vermittlungsstelle SC ausgewählt werden. Ebenso wird die Gebührenerfassung für den Anruf entsprechend der Leitweglenkung über das Übertragunsnetz CA1 durchgeführt. Mit der von dem anrufenden Mobilfunkteilnehmer gewählten Teilnehmerrufnummer des Zielteilnehmers ist das Zielnetz DNW festgelegt. Es besteht beispielsweise bei mehreren Diensteanbietern die Möglichkeit, verschiedene Kundennummern den Mobilfunkteilnehmern, die diese Dienste nutzen können, zuzuordnen. Dies bedeute, daß die Leitweglenkung und Gebührenerfassung über ein weiteres Übertragungsnetz CA2 durchgeführt wird, wenn der den Dienst in Anspruch nehmende Mobilfunkteilnehmer bei einem Diensteanbieter gebucht hat, für den vom Netzbetreiber dieser Übertragungsweg vorgegeben wird. Ein anderer Mobilfunkteilnehmer, der denselben Dienst bei einem anderen Diensteanbieter vereinbart hat, erhält eine Kundennummer, durch die eine Leitweglenkung und Gebührenerfassung über beispielsweise das Übertragungsnetz CA1 erfolgt. Den Übertragungsnetzen CA1 und CA2, die die Leitweglenkung und die Gebührenerfassung für den Netzbetreiber übernehmen, ist gemeinsam, daß eigene Übertragungsleitungen zu diesem Zweck zur Verfügung stehen, die nicht dem Netzbetreiber des Mobilfunknetzes gehören.

Handelt es sich - wie im vorliegenden Fall des Mobilfunknetzes nach dem GSM-Standard - um ein Übertragungsnetz, das die Struktur des Intelligenten Netzes mit mindestens einer zentralen Dienstesteuerungsstelle SCP unterstützt, so erfolgt die Speicherung der Kundennummer in der zentralen Dienstesteuerungsstelle SCP. Die Auswahl der Leitwege durch die Vermittlungsstelle SC erfolgt ebenso anhand der von der Dienstesteuerungsstelle SCP gespeicherten und bereitgestellten Kundennummer. Gemäß der Erfindung wird beispielsweise ein Anruf eines Mobilfunkteilnehmers, der in Deutschland in einem Mobilfunknetz, das nach dem GSM-Standard betrieben wird, registriert ist, durch die Vermittlungsstelle SC anhand der für den Mobilfunkteilnehmer eingetragenen Kundennummer zu einem leitungsgebundenen Netz, z.B. dem öffentlichen Fernsprechnetz, in der Schweiz gelenkt und von dort anschließend zum Zielnetz des angerufenen Teilnehmers weitergeleitet. Die auf Grund des Anrufs anfallenden Gebühren werden ebenfalls auf dem Übertragungsweg von Deutschland über die Schweiz in die USA erfaßt. Durch die Leitweglenkung und Gebührenerfassung über das andere, leitungsgebundene Übertragungsnetz wird eine direkte Verbindung und Gebührenerfassung zwischen dem Mobilfunknetz des anrufenden Mobilfunkteilnehmers und dem Zielnetz des angerufenen Teilnehmers umgangen.

Anrufe, die von anderen Netzen NW oder Nebenstellenanlagen PBX oder von festen Teilnehmerstationen zur Vermittlungsstelle SC kommen, können ebenso in Abhängigkeit einer entsprechenden Kundennummer, die für die leitungsgebundenen Netzteilnehmer reserviert wird, über andere Übertragungsnetze, wie beispielsweise das Übertragungsnetz CA3, zum Zielnetz DNW geleitet und vergebührt werden. Die Leitweglenkung und Gebührenerfassung wird somit in der Vermittlungsstelle SC in Abhängigkeit der dem Teilnehmer jeweils zugeordneten Kundennummer durchgeführt, die den weiteren Übertragungsweg über ein anderes Übertragungsnetz, das Übertragungsleitungen aufweist, festlegt. Es besteht auch die Möglichkeit, daß durch die Kundennummer die Leitweglenkung und Gebührenerfassung über mehrere Übertragungsnetze hintereinander durchgeführt wird, bevor das für den angerufenen Teilnehmer zuständige Zielnetz erreicht wird.

## Patentansprüche

1. Verfahren zur Leitweglenkung und Gebührenerfassung in einer Vermittlungsstelle (SC), von der die Vermittlungsfunktionen bei Anrufen durchgeführt werden, die Mobilfunkteilnehmer eines zellular aufgebauten Mobilfunknetzes betreffen, in dem teilnehmerbezogene Daten der Mobilfunkteilnehmer in mindestens einer zentralen Teilnehmerdatenbasis (z.B. HLR) gespeichert und in dezentrale Teilnehmerdatenbasen (z.B. VLR) eingetragen werden, in deren Versorgungsbereiche sich die Mobilfunkteilnehmer aufhalten,
**dadurch gekennzeichnet,**
**daß** für die Mobilfunkteilnehmer jeweils eine Kundennummer (CUN) als teilnehmerbezogenes Datum in die zentrale Teilnehmerdatenbasis (z.B. HLR) eingetragen wird und daß bei einem Anruf in Abhängigkeit von der eingetragenen Kundennummer (CUN) die Leitweglenkung und Gebührenerfassung über mindestens ein anderes Übertragungsnetz (z.B. CA2), das Übertragungsleitungen hierfür zur Verfügung stellt, durchgeführt wird.

2. Verfahren nach Anspruch 1,
**dadurch gekennzeichnet,**
**daß** die Kundennummer (CUN) in einem Heimatregister (HLR) gespeichert und in ein Besucherregister (VLR), in dessen Versorgungsbereich sich der Mobilfunkteilnehmer aufhält, eingetragen wird, von dessen zugehöriger Mobilvermittlungsstelle die Kundennummer (CUN) zur Durchführung der Leitweglenkung und Gebührenerfassung ausgewertet wird.

3. Verfahren nach Anspruch 1,
**dadurch gekennzeichnet,**
**daß** die Kundennummer (CUN) in einer Dienstesteuerungsstelle (SCP) gespeichert und zur Durchführung der Leitweglenkung und Gebührenerfassung in einer Mobilvermittlungsstelle ausgewertet wird, die zur Abwicklung von Diensten für die Mobilfunkteilnehmer des Mobilfunknetzes eingebunden ist.

4. Verfahren nach einem der vorhergehenden Ansprüche,
**dadurch gekennzeichnet,**
**daß** den Mobilfunkteilnehmern, denen Dienste über verschiedene Diensteanbieter zur Verfügung gestellt sind, unterschiedliche Kundennummern zugeordnet werden.

5. Verfahre nach einem der vorhergehenden Ansprüche,
**dadurch gekennzeichnet,**
**daß** die Leitweglenkung und Gebührenerfassung für andere Teilnehmer, die über Leitungen an die Vermittlungsstelle (SC) angeschlossen sind, über dasselbe Übertragungsnetz durchgeführt wird, das anhand der Kundennummer (CUN) für Mobilfunkteilnehmer ausgewählt wird.

## Claims

1. Method for routing and charge metering in a switching centre (SC), by which, during calls, those switching functions are carried out which relate to mobile radio subscribers in a mobile radio network which has a cellular structure and in which subscriber-specific data about the mobile radio subscriber are stored in at least one central subscriber data base (for example HLR) and are entered into local subscriber data bases (for example VLR) in whose supply areas the mobile radio subscribers are located,
**characterized**
**in that** a customer number (CUN) for the mobile radio subscriber is in each case entered as subscriber-specific data into the central subscriber data base (for example HLR) and in that, when a call is made, the routing and charge metering are carried out on the basis of the entered customer number (CUN) via at least one other transmission network (for example CA2) which makes available transmission lines for this purpose.

2. Method according to Claim 1,
**characterized**
**in that** the customer number (CUN) is stored in a home location register (HLR) and is entered into a visitor location register (VLR) in whose supply area the mobile radio subscriber is located, and by whose associated mobile switching centre the customer number (CUN) is evaluated in order to carry out the routing and charge metering.

3. Method according to Claim 1,
**characterized**
**in that** the customer number (CUN) is stored in a service control point (SCP) and is evaluated in a mobile switching centre in order to carry out the routing and charge metering, which mobile switching centre is included in order to handle services for the mobile radio subscriber of the mobile radio network.

4. Method according to one of the preceding claims,
**characterized**
**in that** the mobile radio subscribers to whom services are made available via different service providers are assigned different customer numbers.

5. Method according to one of the preceding claims,
**characterized**
**in that** the routing and charge metering for other subscribers who are connected via lines to the switching centre (SC) are carried out via the same transmission network which is selected using the customer number (CUN) for mobile radio subscribers.

## Revendications

1. Méthode d'acheminement et de taxation dans un autocommutateur (SC), à partir duquel les fonctions de commutation concernant les abonnés d'un réseau de radiocommunication mobile cellulaire sont réalisées lors des appels, dans lequel des données relatives aux abonnés du réseau de radiocommunication mobile sont mémorisées dans au moins une base de données centralisée (par ex. HLR) concemant les abonnés et sont enregistrées dans des bases de données décentralisées (par ex. VLR), dans les zones de desserte desquelles les abonnés du réseau de radiocommunication mobile séjournent
**caractérisée en ce qu'**un numéro de client (CUN) attribué à chaque abonné au réseau de radiocommunication mobile est enregistré dans la base de données centralisée (par ex. HLR), en tant que donnée relative à l'abonné et que lors d'un appel, l'acheminement et la taxation sont réalisés sur la base du numéro de client enregistré (CUN), par l'intermédiaire d'au moins un autre réseau de transmission (par ex. CA2), qui met des lignes de transmission à disposition.

2. Méthode selon la revendication 1, **caractérisée en ce que** le numéro de client (CUN) est mémorisé dans un enregistreur de localisation nominal (HLR) et dans l'enregistreur de localisation visité (VLR), dans la zone de desserte duquel l'abonné au réseau de radiocommunication mobile séjourne et que l'autocommutateur mobile correspondant évalue le numéro de client (CUN), pour procéder à l'acheminement et à la taxation.

3. Méthode selon la revendication 1, **caractérisée en ce que** le numéro de client (CUN) est mémorisé dans un autocommutateur de contrôle des services (SCP) et que pour procéder à l'acheminement et à la taxation, il est évalué dans d'un autocommutateur mobile, qui est intégré pour le traitement des services destinés aux abonnés du réseau de radiocommunication mobile.

4. Méthode selon l'une quelconque des revendications précédentes, **caractérisée en ce que** différents numéros de clients peuvent être attribués aux abonnés des réseaux de radiocommunication mobile qui disposent de services proposés par plusieurs prestataires de services.

5. Méthode selon l'une quelconque des revendications précédentes, **caractérisée en ce que** l'acheminement et la taxation pour d'autres abonnés qui sont reliés par câble à l'autocommutateur (SC) sont réalisés par l'intermédiaire du même réseau de transmission, qui a été sélectionné sur la base du numéro de client (CUN) pour les abonnés au réseau de radiocommunication mobile.
